# EUROPEAN PATENT APPLICATION

(11) **EP 2 247 141 A1**
(43) Date of publication of application: **03.11.2010**
(21) Application number: 09704032.3
(22) Date of filing: 22.01.2009
(51) Int. Cl.: H04W 36/12, H04W 36/18, H04W 40/34, H04W 88/16

(54) **COMMUNICATION CONTROL DEVICE, COMMUNICATION SYSTEM, COMMUNICATION CONTROL METHOD, AND COMMUNICATION CONTROL PROGRAM**

(30) Priority: 25.01.2008 JP 2008015369
(71) Applicant: NEC Corporation, Minato-ku Tokyo 108-8001 (JP)
(72) Inventor: KURITA, Shigeharu, Tokyo 108-8001 (JP)
(74) Representative: Glawe, Delfs, Moll
(86) International application number: PCT/JP2009/051392
(87) International publication number: WO 2009/093752

(57) **Abstract**

Provided is a communication system capable of performing handover control using MGWs. The communication system includes communication control devices (MGW1 (a2) and MGW2 (a3)) capable of converting between a next-generation communication protocol and IP, and a mobile terminal (a1). When starting handover of the mobile terminal (a1) in a state in which communication is performed in a first context, the communication control device (MGW1 (a2)) adds a new second context and copies downstream of the first context to the second context.

## Description

### TECHNICAL FIELD

This invention relates to handover control in communication control devices and communication systems, and particularly to handover control using the MEGACO (MEdia GAteway COntrol) topology function.

### BACKGROUND ART

Mobile telephones have been remarkably widespread with mobile communication services, and the third-generation mobile telephone (3GPP:3rd Generation Partnership Project) service, the wireless LAN (Local Area Network) (WLAN) service, and other mobile communication services are widely used. In recent years, there is a trend to integrate these services by the IMS (IP Multimedia Subsystem).

The IMS is a system capable of providing IP-based multimedia services. The IMS also can be connected to the PSTN (Public Switched Telephone Network) or Internet to provide a variety of services.

The third-generation mobile telephone is configured with a CS (Circuit Switched) domain using a circuit switched network. However, the IMS is a system configured with a PS (Packet Switched) domain. Therefore, in order to accommodate the third-generation mobile telephone in an IMS network, the CS service must be converted into the PS service, that is to say, the CS domain control protocol must be converted into SIP(Session Initiation Protocol) for the PS domain.

Some techniques for converting the CS domain control protocol into the SIP for the PS domain are disclosed in known documents, one of which for example is Japanese Laid-Open Patent Publication No. 2007-60181 (Patent Document 1) describing a technique for converting a signal protocol into a SIP signal for the purpose of handover between different types of wireless networks.

Further, for U-plane architectures, conversion between the third-generation mobile telephone protocol and the IP protocol is necessary. A MGW (Media GateWay) is a device enabling this control and provides a connection function between different types of networks.

When a user, who is making a telephone call using a third-generation mobile telephone via an IMS network, moves from a MGW area to which the user is currently connected to another MGW area, the call must be sustained by being handed over to the destination MGW. However, no system has been established yet to accommodate the third-generation mobile telephone in the IMS network and to control the MGW. In addition, as far as the inventor of this invention knows, no method of performing handover control in the MGW. Therefore, there is a demand for a system to perform handover control using the MGW.

There is disclosed in documents such as W02004/114695 (Patent Document 2) a technique in which, wireless base stations are provided with a routing function, and when a mobile node moves from a cell belonging to arbitrary wireless base station having the routing function to a cell belonging to another arbitrary wireless base station having the routing function, the destination wireless base station or mobile node controls the source wireless base station to transfer the packet received from the remote node to the destination wireless base station.

### DISCLOSURE OF THE INVENTION

### Problems To Be Solved by the Invention:

Patent Document 2 describes a technique in which a packet to be transmitted to a mobile node in a wireless section is copied and transferred to a destination wireless base station. However, Patent Document 2 does not describe the handover control using MGWs nor does it suggest the necessity thereof, at all.

This invention has been made in view of the circumstances described above, and provides a communication control device, a communication system, a communication control method, and a communication control program, which are capable of performing handover control using MGWs.

### Means for Solving the Problems

An aspect of the invention provides a communication control device capable of converting between a next-generation communication protocol and IP, wherein when starting handover in a state in which communication is performed in a first context, the communication control device adds a new second context and copies downstream of the first context to the second context.

Another aspect of the invention provides a communication system comprising a communication control device capable of converting between a next-generation communication protocol and IP, and a mobile terminal, wherein when starting handover of the mobile terminal in a state in which communication is performed in a first context, the communication control device adds a new second context and copies the downstream of the first context to the second context.

Another aspect of the invention provides a communication control method capable of converting between a next-generation communication protocol and IP, wherein when starting handover in a state in which communication is performed in a first context, a new second context is added, and the downstream of the first context is copied to the second context.

Still another aspect of the invention provides a communication control program capable of converting between a next-generation communication protocol and IP, wherein when starting handover in a state in which communication is performed in a first context, the program causes a computer to execute processing to add a new second context and to copy the downstream of the first context to the second context.

This invention enables handover control using MGWs.

### BRIEF DESCRIPTION OF THE DRAWINGS

Fig. 1 is a diagram schematically showing a system configuration of a communication system according to a first embodiment of this invention;
Fig. 2 is a diagram schematically showing a communication system according to a second embodiment of this invention;
Fig. 3 is a diagram showing contexts and terminations, illustrating a connection model of (first) handover according to the first and second embodiments;
Fig. 4 is a diagram showing contexts and terminations, illustrating a connection model of (second) handover according to the first and second embodiments;
Fig. 5 is a diagram showing contexts and terminations, illustrating a connection model of handover according to a third embodiment; and
Fig. 6 is a schematic diagram of a communication system according to the third embodiment of this invention.

### BEST MODE FOR CARRYING OUT THE INVENTION

### [First Embodiment]

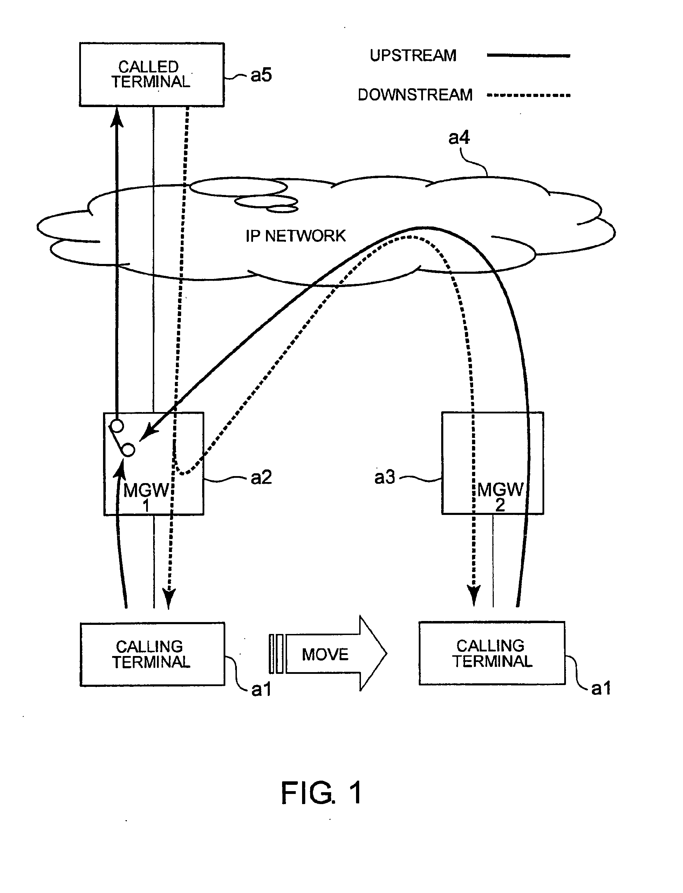

First, a communication system according to a first embodiment of this invention will be described with reference to Fig. 1.

### <System Configuration>

The communication system of the first embodiment has a calling terminal (a1) which is a mobile terminal, a MGW1 (a2) which is a communication control device, a MGW2 (a3) which is a communication control device, an IP network (a4), and a called terminal (a5). In the description below, the term MGW (Media Gateway) shall be used in the same meaning as a communication control device for converting the U-plane protocol for third-generation mobile telephones into IP.

The communication control devices (MGW1 (a2) and MGW2 (a3)) are designed to enable conversion between a line protocol for next generation communication and the IP protocol, and operate according to ITU-T protocol H.248 and Megaco protocol defined in RFC 3015. The communication control devices (MGW (a2) and MGW2 (a3)) are capable of accommodating the TDM lines and accommodating the IP lines to mutually convert the protocols. When the communication control device (MGW1 (a2)) starts handover for the mobile terminal (a1) while performing communication by the first context, the communication control device (MGW1 (a2)) adds a new second context and copies the downstream of the first context to the second context. This enables the communication control device (MGW) to perform handover control.

Describing more specifically, in the communication system shown in Fig. 1, the calling terminal (a1) is connected to the MGW1 (a2) and is in communication with the called terminal (a5) via the IP network (a4). When, in this state, the calling terminal (a1) moves to an area belonging to the MGW2 (a3) as shown in Fig. 1, the handover is implemented. A handover command is issued by a mobile services switching center (not shown), more specifically, by a MGW controller included in the mobile services switching center.

As for the operation to start the handover, the MEGACO topology function is utilized to set the topology in the source MGW1 (a2), the destination MGW2 (a3) is added, and the downstream is copy transferred from the source MGW1 (a2) to the destination MGW2 (a3). The connection is sustained by copy transferring the downstream data addressed to the source MGW temporarily to the destination MGW. During this, the upstream is kept selecting the source MGW1 (a2). The term "upstream" refers to stream from the calling terminal to the called terminal, and the term "downstream" refers to stream from the called terminal to the calling terminal.

Subsequently, during the handover switching, the upstream is set to select the destination MGW2 (a3). Finally, the processing proceeds to the handover completion state, and both the upstream and downstream are set to select the destination MGW2 (a3).

As a result of this, the calling terminal (a1) which has been connected to the MGW1 (a2) is allowed to continue the communication with the called terminal (a5) even after moving into an area belonging to the MGW2 (a3).

In the communication system according to the first embodiment as described above, the MEGACO topology function is used, so that the topology is set in the source MGW1 (a2) when the handover is requested, and the downstream of the source MGW1 (a2) is copy transferred to the destination MGW2 (a3). Further, the switching of the upstream makes it possible to implement the handover control in the MGWs.

### <Handover Control>

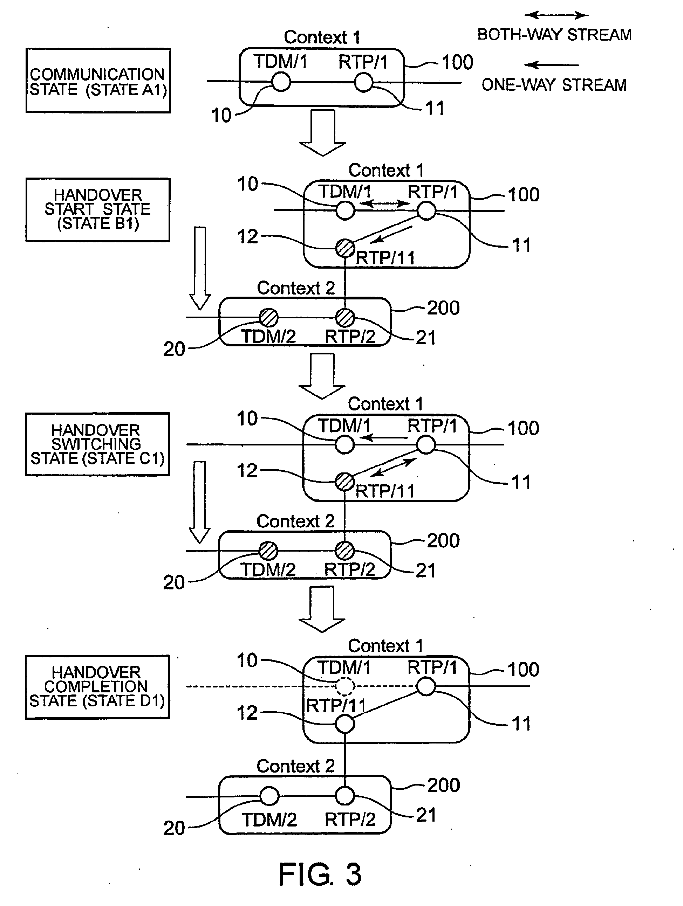

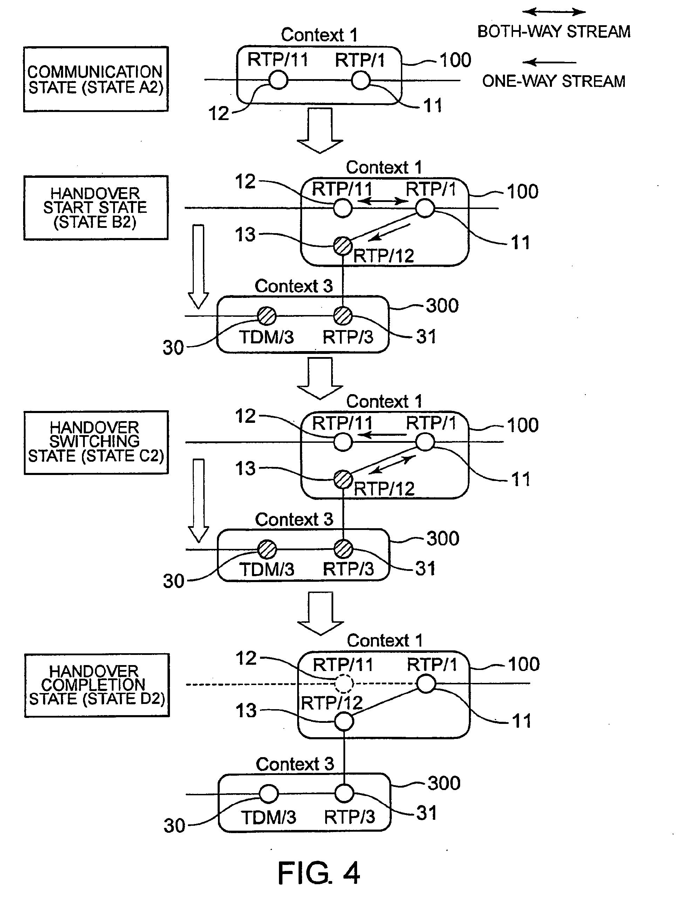

Next, referring to Fig. 3 and Fig. 4, the handover control will be described with respect to the communication system shown in Fig. 1.

Fig. 3 is a diagram showing contexts and terminations in a MGW, illustrating the connection model in the first handover, and Fig. 4 is a diagram showing contexts and terminations in a MGW, illustrating the connection model in the second handover.

### <First Handover>

First, referring to Fig. 3, first handover control will be described. It should be noted that the term "communication state (or state A1)" in Fig. 3 indicates that a TDM/1 termination (10) and a RTP/ termination (11) included in the context 1 (100) of the MGW1 (a2) are in communication.

According to this first embodiment, when the mobile terminal (calling terminal (a1)) moves from an area belonging to the MGW (a2) to an area belonging to a different MGW, or the MGW (a3), a "handover start state (or state B1)" as shown Fig. 3 is established. In the state B1 of Fig. 3, a new context 2 (200) is added as a handover destination, and a RTP/11 termination (12) is added in the context 1 (100) which is the handover source. The new context 2 (200) corresponds to TDM of the MGW2 (a3) and includes a TDM/2 termination (20) and a RTP/2 termination (21). Then the topology is set so that one-way stream is established between the RTP/1 termination (11) and the RTP/11 termination (12) in order to sustain the downstream connection, and the downstream data is started to be copied to the destination context 2 (200). It should be noted that RTP is an abbreviation of Real Time Protocol, and TDM is an abbreviation of Time Division Multiplex. A RTP termination is a termination for RTP stream, and a TDM termination is a termination for TDM lines. The TDM termination belongs to the mobile terminal side.

Next, the processing proceeds to the "handover switching state (state C1)" shown in Fig. 3, and the topology is changed. The stream setting between the RTP/1 termination (11) and the TDM/1 termination (10) is changed to one-way stream, while the stream setting between the RTP/1 termination (11) and the RTP/11 termination (12) is changed to both-way stream, so that the streams between the source and the destination are switched over.

Finally, the processing proceeds to the "handover completion state (state D1)" shown in Fig. 3, wherein only the TDM/1 termination (10) is released and the RTP/1 termination (11) is continued to be used as an anchor. This means that the RTP/1 termination (11) of the MGW a2 serves as a termination for holding the connection between the MGW a3 and the called terminal after the completion of handover.

### <Second Handover>

Fig. 4 is a diagram showing contexts and terminations in a MGW, illustrating the connection model in the second handover.

"Communication state (state A2)" in Fig. 4 indicates that the RTP/11 termination (12) and the RTP/1 termination (11) in the context 1 (100) of the MGW a2 are in communication.

When the mobile terminal (calling terminal a1) further moves to an area belonging to a different MGW a4 (not shown), the "handover start state (state B2)" is established. As shown in the start state in Fig. 4, a new context 3 (300) is added as a handover destination, and a RTP/12 termination (13) is added in the context 1 (100) which is the handover source. The new context 3 (300) includes a TDM/3 termination (30) and a RTP/3 termination (31). The context 3 (300) corresponds to the context of the MGW a4. The topology is then set so that one-way stream is established between the RTP/1 termination (11) and the RTP/12 termination (13), and the downstream is started to be copied to the destination context 3 (300).

Subsequently, the processing proceeds to the "handover switching state (state C2)" shown in Fig. 4, and the topology is changed. The stream setting between the RTP/1 termination (11) and the RTP/11 termination (12) is changed to one-way stream, while the stream setting between the RTP/1 termination (11) and the RTP/12 termination (13) is changed to both-way stream, whereby the streams between the source and the destination are switched over.

Finally, the processing proceeds to the "handover completion state" shown in Fig. 4, and only the RTP/11 termination (12) is released. The RTP/1 termination (11) is continued to be used as the anchor.

### [Second Embodiment]

### <System Configuration>

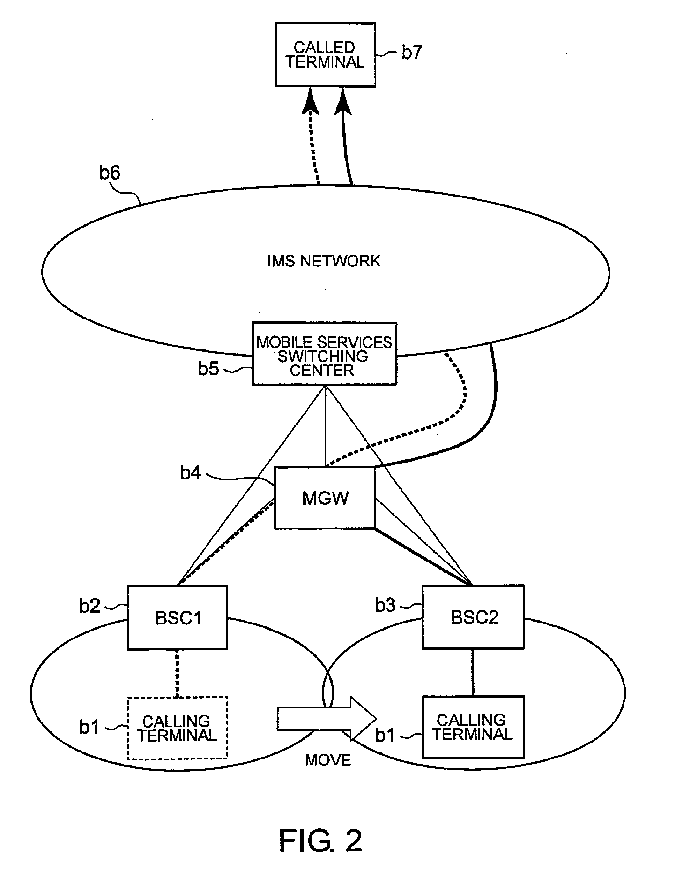

Fig. 2 schematically shows a communication system according to a second embodiment of this invention. In this embodiment, Intra-MSC handover takes place within an area of the same mobile services switching center.

The communication system includes a calling terminal (b1), a BSC (Base Station Controller)1 (b2), a BSC2 (b3), a MGW (b4), a mobile services switching center (b5), an IMS network (b6), and a called terminal (b7).

The calling terminal (b1) and the called terminal (b7) are communication devices such as third-generation mobile telephones. It is assumed that, in the system configuration shown in Fig. 2, the calling terminal (b1) is in communication with the called terminal (b7) via the IMS network (b6).

The IMS network (b6) provides an IP-based multimedia service. The IMS network (b6) is capable of providing, not only the IP-based multimedia service, but also other various services by being connected to PSTN or Internet.

The mobile services switching center (MSC) (b5) is a communication control device which performs conversion between SIP and C-Plane (Control-Plane) protocol for the third-generation mobile telephones, accommodate the third-generation mobile telephone system in the IMS network (b6), and controls the MGW (b4). A MGC (Media Gateway Controller) included in the mobile services switching center controls the MGW.

The MGW (b4) is a communication control device which converts the U-plane protocol for the third-generation mobile telephones into IP.

The BSC1 (b2) and BSC2 (b3) are communication control devices which perform area management for the third-generation mobile telephones. In the system configuration shown in Fig. 2, the BSC1 (b2) and the BSC2 (b3) are arranged in an area belonging to the mobile services switching center (b5).

### <Handover Control>

Next, Intra-MSC handover control in the communication system shown in Fig. 2 will be described.

The handover according to this second embodiment includes handover in which the terminal is accommodated in an area belonging to the same MGW even after move, and handover in which the terminal is moved to an area belonging to a different MGW. Since the handover processing within the same MGW involves similar processing to that in the handover between different MGWs, the following description of first handover and second handover will be made, again referring to Fig. 3 and Fig. 4 which have been used for the description of the first embodiment.

Referring to Fig. 2 and Fig. 3, first handover control will be described. It is assumed that, in Fig. 2, U-planes of the calling terminal (b1) and called terminal (b7) are in communication via the BSC1 (b2) and the MGW (b4).

In the "communication state (state A1)" shown in Fig. 3, a TDM/1 termination (10) and a RTP/1 termination (11) are located in the context 1 (100 of the MGW (b4). The TDM/1 termination (10) is a termination coupled to the calling terminal b1 via the BSC1.

When the calling terminal (b1) moves from an area belonging to the BSC1 (b2) to an area belonging to the BSC2 (b3), the BSC1 (b2) issues a handover request to the mobile services switching center (b5) by means of a C-Plane signal.

Receiving the handover request, the mobile services switching center (b5) issues a handover request to the BSC2 (b3), and sends an Add request to the MGW (b4) by means of MEGACO protocol.

Receiving the Add request, the MGW (b4) proceeds to the "handover start state (state B1)" shown in Fig. 3, and creates a context 2 (200) as a handover destination within the MGW (b4). The MGW (b4) then returns an Add reply to the mobile services switching center (b5) shown in Fig. 2. The context 2 (200) includes a TDM/2 termination (20) and a RTP/2 termination (21). This means that the TDM/2 termination (20) of the handover destination is a termination coupled to the calling terminal via the BSC2 (b3).

The mobile services switching center (b5) sends an Add request to the MGW (b4). Receiving the Add request, the MGW (b4) adds a RTP/11 termination (12) to the context 1 (100) of the handover source shown in Fig. 3. The MGW (b4) sets the topology between the TDM/1 termination (10) and the RTP/1 termination (11), and between the RTP/1 termination (11) and the RTP/11 termination (12). Further, one-way stream is established between the RTP/1 termination (11) and the RTP/11 termination (12), and the downstream is started to be copy-transferred to the destination context 2 (200). At this point, the MGW (b4) returns an Add reply to the mobile services switching center (b5).

Subsequently, the mobile services switching center (b5) transmits a Modify request to the MGW (b4). Receiving the Modify request, the MGW (b4) establishes both-way stream between the RTP/11 termination (12) and the RTP/2 termination (21) shown in Fig. 3. The MGW (b4) then returns a Modify reply to the mobile services switching center (b5).

Subsequently, the mobile services switching center (b5) sends a Modify request to the MGW (b4). Receiving the Modify request, the MGW (b4) proceeds to the "handover switching state (State C1)" shown in Fig. 3, and changes the topology between the TDM/1 termination (10) and the RTP/ termination (11), and between the RTP/1 termination (11) and the RTP/11 termination (12). The MGW (b4) changes the stream setting between the RTP/1 termination (11) and the TDM/1 termination (10) to one-way stream, and changes the stream setting between the RTP/1 termination (11) and the RTP/11 termination (12) to both-way stream, so that the upstream between the handover destination and the handover source is switched over. Upon completion of the switching, the MGW (b4) returns a Modify reply to the mobile services switching center (b5).

Subsequently, the mobile services switching center (b5) sends a Sub request to the MGW (b4). Receiving the Sub request, the MGW (b4) proceeds to the "handover completion state (state D1)" shown in Fig. 3, and the MGW (b4) releases the TDM/1 termination (10) which is not used any more. Upon completion of releasing the TDM/1 termination (10), the MGW (b4) returns a Sub reply to the mobile services switching center (b5).

The MGW (b4) continues to use the RTP/1 termination (11) as an anchor as shown in Fig. 3.

Next, referring to Fig. 2 and Fig. 4, second handover control will be described. It should be noted that the "communication state (state A2)" shown in Fig. 4 indicates that the RTP/11 termination (12) and the RTP/1 termination (11) included in the context 1 (100) are in communication with the context 1 (100).

When, in this state, the mobile terminal moves to an area belonging to a different MGW (b5) (not shown), the MGW (b4) receives an Add request and proceeds to the "handover state (B2)" shown in Fig. 4, and a context 3 (300) is creased as a handover destination. The MGW (b4) then returns an Add reply to the mobile services switching center (b5) shown in Fig. 2. The context 3 (300) includes a TDM/3 termination (30) and a RTP/3 termination (31). The TDM/3 termination (30) means a termination of the MGW (b5).

Upon receiving the Add request, the MGW (b4) adds a RTP/12 termination (13) to the context 1 (100) of the handover source shown in Fig. 4. The MGW (b4) also sets the topology between the RTP/11 termination (12) and the RTP/1 termination (11), and between the RTP/1 termination (11) and the RTP/12 termination (13). Further, the MGW (b4) changes the stream setting between the RTP/1 termination (11) and the RTP/12 termination (13) to one-way stream, and starts to copy-transfer the downstream to the destination context 3 (300). At this point, the MGW (b4) returns an Add reply to the mobile services switching center (b5).

Subsequently, upon receiving an Modify request, the MGW (b4) establishes both-way stream between the RTP/12 termination (13) and the RTP/3 termination (31) shown in Fig. 4. The MGW (b4) then returns a Modify reply to the mobile services switching center (b5).

Subsequently, upon receiving a Modify request, the MGW (b4) proceeds to the "handover switching state (C2)" shown in Fig. 4, and changes the topology between the RTP/11 termination (12) and the RTP/1 termination (11), and between the RTP/1 termination (11) and the RTP/12 termination (13). The MGW (b4) then changes the stream setting between the RTP/1 termination (11) and the RTP/1 termination (12) to one-way stream, while changing the stream setting between the RTP/1 termination (11) and the RTP/12 termination (13) to both-way stream, so that the upstream between the handover destination and the handover source is changed over. Upon completion of the switching, the MGW (b4) returns a Modify reply to the mobile services switching center (b5).

Subsequently, upon receiving a Sub request, the MGW (b4) proceeds to the "handover completion state (state D2)" shown in Fig. 4, and the MGW (b4) releases the RTP/11 termination (12) which is not used any more. Upon completion of releasing the RTP/11 termination (12), the MGW (b4) returns a Sub reply to the mobile services switching center (b5).

The MGW (b4) continues to use the RTP/1 termination (11) as an anchor as shown in Fig. 4.

Although the embodiment above has been described on the assumption that the processing operations shown in Fig. 3 and Fig. 4 are performed in the same MGW (b4) and a different MGW, respectively, the processing operations in Fig. 4 may be performed in the same MGW (b4). The handover in this case corresponds to handover which is implemented when the calling terminal moves to an area managed by another BSC belonging to the same MGW.

In the communication system according to this second embodiment as described above, the MEGACO topology function is used so that when a handover request is made, the topology is set in the context of the handover source, a context of the handover destination is added, and the downstream in the context of the handover source is copy-transferred to the context of the handover destination. Further, the switching of the upstream makes it possible to implement handover control in the MGW.

Further, since the RTP and the RTP context are used as an anchor after completion of the handover, the same control is possible either for the handover control in areas belonging to the same MGW control node (MGW) or for the handover control involving a plurality of nodes (MGWs).

### [Third Embodiment]

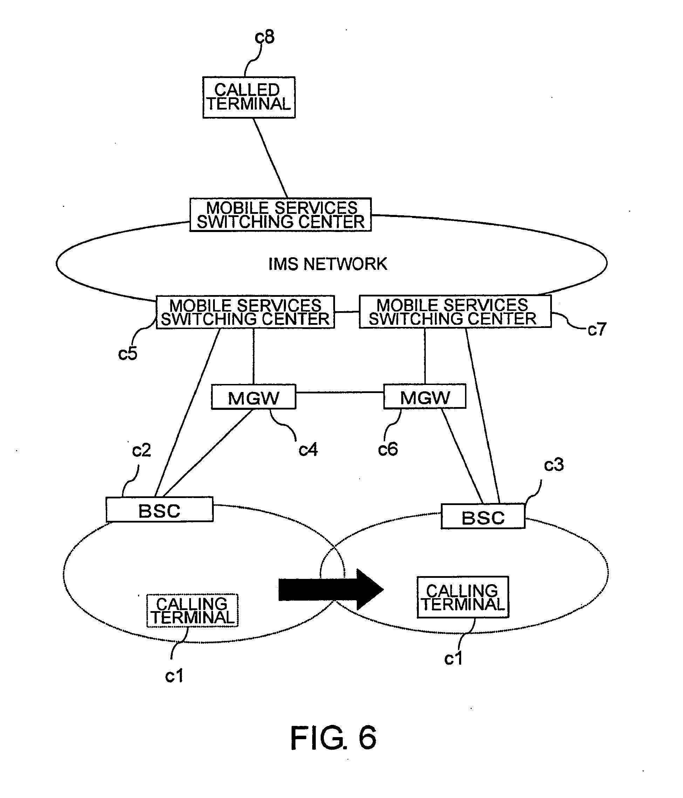

Fig. 6 is a diagram schematically showing a communication system according to a third embodiment. In this embodiment, handover is implemented between different mobile services switching centers, that is to say, Inter-MS handover is implemented.

This communication system includes a calling terminal (c1), a BSC (Base Station Controller) (c2), a BSC2 (c3), a MGW (c4), a mobile services switching center (c5), a MGW (c6), a mobile services switching center (c7), an IMS network, and a called terminal (c8). The MGW (c4) belongs to the mobile services switching center (c5), and the MGW (c6) belongs to the mobile services switching center (c7).

The calling terminal (c1) is a third-generation mobile terminal, and the called terminal (c8) is a communication device such as a third-generation mobile handset. The calling terminal (c1) and the called terminal (c8) are in communication via the IMS network (b6).

The MGW (c4) is a communication control device which converts the U-plane protocol for third-generation mobile telephones into IP.

The BSC (c2) and the BSC (c3) are communication control devices performing area management for third-generation mobile telephones.

In the communication system according to the third embodiment, the MGW (c4) is used as an anchor. In this case as well, the handover control can be performed in the same manner as in the first embodiment.

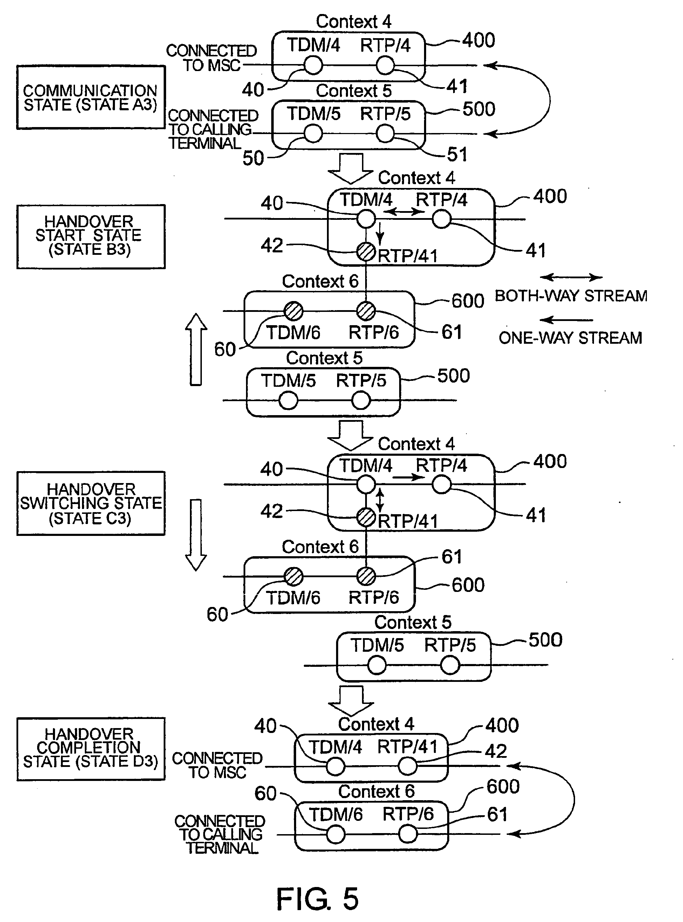

The second embodiment will be described in detail with reference to Fig. 5 showing contexts and terminations, illustrating a connection model of handover according to the third embodiment.

Description will be made on a process to perform handover between the MGW (c4) managed by the mobile services switching center (c5) and the MGW (c4) managed by the mobile services switching center (c7).

In the "communication state (state A3)" shown in Fig. 5, the TDM/4 termination (40) is connected to the MSC circuit, the RTP/4 termination (41) and the RTP/5 termination (51) are connected to each other, and the TDM/5 termination (50) is connected to the calling terminal (c1) which is a subscriber.

When the mobile terminal moves to the MGW (c6) belonging to a different mobile services switching center (c7), the MGW receives an Add request and proceeds to the "handover state (state C3)" shown in Fig. 5. The MGW (c5) adds a new context 6 (600) as a handover destination and returns an Add reply. The context 6 (600) includes a TDM/6 termination (60) and a RTP/6 termination (61).

Upon receiving an Add request, the MGW (c5) adds a RTP/41 termination (42) in the context 4 (400) of the handover source, and sets topology between the TDM/4 termination (40) and the RTP/4 termination (41), and between the TDM/4 termination (40) and the RTP/41 termination (42). Further, the MGW (c5) establishes one-way stream between the TDM/4 termination (40) and the RTP/41 termination (42), and starts to copy the downstream to the destination context 6 (600). The MGW (c5) then returns an Add reply.

Upon receiving a Modify request, the MGW (c5) establishes both-way stream between the RTP/41 termination (42) and the RTP/6 termination (61).

Upon receiving a Modify request, the MGW proceeds to the "handover switching state (state C3)" shown in Fig. 5, and changes the topology. The MGW changes the stream setting between the TDM/4 termination (40) and the RTP/4 termination (41) to one-way stream, and changes the stream setting between the TDM/4 termination (40) and the RTP/41 termination (42) to both both-way stream, so that the streams of the source and the destination are switched over. The MGW (c5) then returns a Modify reply.

Finally, upon receiving a Sub request, the MGW (c5) proceeds to the "handover completion state (D4)" shown in Fig. 5, releases only the RTP/4 termination (41), and returns a Sub reply.

Further, upon receiving a Sub request, the MGW (c5) deletes the context 5 (500) and returns a Sub reply.

The MGW (c5) continues to use the context 4 (400) as an anchor.

In the communication system according to this third embodiment as described above, handover can be implemented by using the MEGACO topology function even if the anchor is just a mobile services switching center.

It should be understood that the embodiments described above are preferred examples of this invention, and the invention is not limited to the foregoing embodiments but may be modified in various other manners within the scope of the appended claims.

For example, it should be understood that the processing operations described above and shown in Figs. 3 to 5 may be performed by the same MGW or different MGWs. Further, although the description of the foregoing embodiments has been made on the assumption that the MGW converts U-plane protocol for third-generation mobile telephones into IP, the invention is not limited to the third generation telephones but the system of the invention may be structured to convert the N-th (N is an arbitrary integer) generation protocol.

Further, the control operations of the various devices constituting the communication system according to the foregoing embodiments may be implemented with the use of hardware, software, or combination thereof.

When using software to implement the processing, a program in which processing sequence is recorded is installed in a memory of a computer incorporated in dedicated hardware so that the computer executes the program. Alternatively, the program may be installed in a general-purpose computer capable of executing various types of processing so that the computer executes the program.

For example, the program can be preliminarily recorded on a recording medium such as a hard disc or ROM (Read Only Memory). Alternatively, the program may be either temporarily or permanently stored (recorded) on a removable recording medium. Such a removable recording medium can be provided as so-called package software. The removable recording media include Floppy (registered trademark) discs, CD-ROMs (Compact Disc Read Only Memories), MO (Magneto-optical) discs, DVDs (Digital Versatile Discs), magnetic discs, semiconductor memories, and so on.

The program is installed from the removable recording medium as described above onto a computer. Alternatively, the program may be wirelessly transferred from a download site to the computer. Alternatively, the program may be transferred to the computer via a network.

The communication system according to the foregoing embodiments of the invention may be designed to be capable of not only implementing the processing operations in the temporal sequence as described above, but also implementing the processing operations either in parallel or individually as required or according to the processing capacities of the devices implementing the processing.

As can be seen from the description above, the embodiments of the invention have the following features.

The MGW according to an embodiment of the invention is a communication control device capable of converting between a next-generation communication protocol and IP, and is **characterized in that**, when handover is started in a state in which communication is performed in a first context (e.g., context 1 (100) shown in Fig. 3), the MGW adds a new second context (e.g., context 2 (200)) and copies the downstream of the first context (100) to the second context (200).

Further, the MGW according to an embodiment of the invention is **characterized in that** the MGW adds a new RTP termination (e.g., the RTP/11 termination (12) shown in Fig. 3) in the first context (100), sets topology in the first context (100), and copies the downstream of the first context (100) to the second context (200).

Further, the MGW according to an embodiment of the invention is **characterized in that** when switching the handover, the MGW changes the topology of the first context (100) and switches over the upstream of the handover destination and the handover source.

Further, the MGW according to an embodiment of the invention is **characterized in that** the MGW establishes one-way stream between an existing first RTP termination (RTP/1 termination (11)) and TDM termination (TDM/1 termination (10)) included in the first context (100), and establishes both-way stream between the first RTP termination (11) and a new RTP termination (12), so that the upstream of the handover destination and the handover source is switched over.

Further, the MGW according to an embodiment of the invention is **characterized in that** when completing the handover, the MGW releases the TDM termination (10) while continuing to use the first RTP termination (11) as an anchor.

Further, the MGW according to an embodiment of the invention is **characterized in that** the MGW establishes one-way stream between an existing first RTP termination (RTP/1 termination (11)) and a second RTP termination (RTP/11 termination (12)) included in a first context (e.g., context 1 (100) shown in Fig. 4), and establishes both-way stream between the first RTP termination (11) and a new RTP termination (RTP/12 termination (13)), so that the upstream of the handover destination and the handover source is switched over.

Further, the MGW according to an embodiment of the invention is **characterized in that** when completing the handover, the MGW releases the second RTP termination (12) while continuing to use the first RTP termination (11) as an anchor.

Further, the MGW according to an embodiment of the invention is **characterized in that** the MGW establishes one-way stream between an existing TDM termination (TDM/4 termination (40)) and a first RTP termination (RTP/4 termination (41)) included in a first context (e.g., context 4 (400) shown in Fig. 4) and establishes both-way stream between the TDM termination (40) and a new RTP termination (RTP/41 termination (42)) so that the upstream of the handover destination and the handover source is switched over.

Further, the MGW according to an embodiment of the invention is **characterized in that** when completing the handover, the MGW releases the first RTP termination (41) while continuing to use the first context (400) as an anchor.

In this manner, the MGW according to the embodiments of the invention is allowed to perform handover control.

### INDUSTRIAL APPLICABILITY

This invention is applicable to communication systems performing handover control.

This application is based upon and claims the benefit of priority from Japanese Patent Application No. 2009-015369, filed January 25, 2009, the disclosure of which is incorporated herein in its entirety by reference.

## Claims

1. A communication control device capable of converting between a next-generation communication protocol and IP, wherein when starting handover in a state in which communication is performed in a first context, the communication control device adds a new second context and copies downstream of the first context to the second context.

2. The communication control device as claimed in Claim 1, wherein the communication control device adds a new RTP termination in the first context, sets topology in the first context, and copies downstream of the first context to the second context.

3. The communication control device as claimed in Claim 1 or 2, wherein when switching the handover, the communication control device changes the topology of the first context and thus switches the upstream between a handover destination and a handover source.

4. The communication control device as claimed in Claim 3, wherein the communication control device establishes one-way stream between an existing first RTP termination and a TDM termination included in the first context, establishes both-way stream between the first RTP termination and the new RTP termination, and thus switches the upstream between the handover destination and the handover source.

5. The communication control device as claimed in Claim 4, wherein when completing the handover, the communication control device releases the TDM termination, while continuing to use the first RTP termination as an anchor.

6. The communication control device as claimed in Claim 3, wherein the communication control device establishes one-way stream between an existing first RTP termination and a second RTP termination included in the first context, establishes both-way stream between the first RTP termination and the new RTP termination, and thus switches the upstream between the handover destination and the handover source.

7. The communication control device as claimed in Claim 6, wherein when completing the handover, the communication control device releases the second RTP termination, while continuing to use the first RTP termination as an anchor.

8. The communication control device as claimed in Claim 3, wherein the communication control device establishes one-way stream between an existing TDM termination and a first RTP termination included in the first context, establishes both-way stream between the TDM termination and the new RTP termination, and thus switches the upstream between the handover destination and the handover source.

9. The communication control device as claimed in Claim 8, wherein when completing the handover, the communication control device releases the first RTP termination, while continuing to use the first context as an anchor.

10. A communication system comprising a communication control device capable of converting between a next-generation communication protocol and IP, and a mobile terminal, wherein when starting handover of the mobile terminal in a state in which communication is performed in a first context, the communication control device adds a new second context and copies the downstream of the first context to the second context.

11. A communication control method capable of converting between a next-generation communication protocol and IP, wherein when starting handover in a state in which communication is performed in a first context, a new second context is added, and the downstream of the first context is copied to the second context.

12. A communication control program capable of converting between a next-generation communication protocol and IP, wherein when starting handover in a state in which communication is performed in a first context, the program causes a computer to execute processing to add a new second context and to copy the downstream of the first context to the second context.
